# NEUE EUROPÄISCHE PATENTSCHRIFT

(11) **EP 0 355 000 B2**
(45) Veröffentlichungstag und Bekanntmachung des Hinweises auf die Entscheidung über den Einspruch: **25.01.1995**
(45) Hinweis auf die Patenterteilung: 20.05.1992
(21) Anmeldenummer: 89114063.4
(22) Anmeldetag: 29.07.1989
(51) Int. Cl.: C08G 18/10, C08G 18/32, C08G 18/66

(54) **Verfahren zur Herstellung von Urethangruppen aufweisenden Polyharnstoff-Elastomeren**
Process for preparing polyurea elastomers with urethane groups
Procédé de préparation d'élastomères de polyurée avec des groupes uréthane

(30) Priorität: 13.08.1988 DE 3827595
(43) Veröffentlichungstag der Anmeldung: 21.02.1990
(73) Patentinhaber: BAYER AG, 51368 Leverkusen (DE)
(72) Erfinder: Eyerer, Peter, Prof. Dr. Ing., D-7302 Ostfiledern (DE); Braun, Hans-Jochen, Dipl.-Ing., D-7310 Plochingen (DE); Meiners, Hans-Joachim, Dr., D-5090 Leverkusen 1 (DE); Dörner, Karl Heinz, D-5024 Pulheim (DE); Ruckes, Andreas, Dr., D-5090 Leverkusen 3 (DE); Schmidt, Manfred, Dr., D-4047 Dormagen (DE)

(56) Entgegenhaltungen:
- EP-A- 230 662
- EP-A- 0 239 870
- AT-E- 22 306
- DE-A- 2 622 951
- DE-A- 3 433 979
- DE-B- 1 240 654
- US-A- 4 374 210
- US-A- 4 442 235
- Kunstoff-Handbuch, Band VII, Polyurethane, München, 1966, S.4-5, 440, 447, 451-452
- Polyurethanes World Congress 1987, pp. 198-204, pp. 213-217
- Macosko, Chr. W.: RIM, Fundamentals of Reaction Injection Molding, Munich, Hanser, 1989

## Beschreibung

Die Erfindung betrifft ein neues Verfahren zur Herstellung von Urethangruppen aufweisenden Polyharnstoff-Elastomeren auf der Basis von Polyisocyanaten oder Polyisocyanatgemischen der Dichenylmethanreihe. höhermolekularen Polyhydroxylverbindungen und alkylsubstituierten aromatischen Diamiren nach dem Prinzip der Reaktionsspritzgußtechnik.

Die Herstellung von Urethangruppen aufweisenden Polyharnstoff-Elastomeren nach dem Prinzip der Reaktionsspritzgußtechnik unter Verwendung von Polyisocyanaten oder Polyisocyanatgemischen der Diphenylmethanreihe, höhermolekularen Polyetherpolyolen und alkylsubstituierten aromatischen Diaminen ist aus der DE-AS 2 622 951 (= US-PS 4 218 543) bereits bekannt, wobei nach dem one-shot-Verfahren gearbeitet, d.h. die Polyisocyanatkomponente mit einem Gemisch aus den Verbindungen mit gegenüber Isocyanatgruppen reaktionsfähigen Gruppen vermischt wird. Das Verfahren ist auf die Mitverwendung von starken Katalysatoren für die Reaktion zwischen Isocyanatgruppen und Hydroxylgruppen angewiesen.

Die US-PS 4 374 210 betrifft eine Abänderung dieses Verfahrens, gemaß welcher 0,01 bis 0.5 Äquivalente der höhermolekularen Polyolkomponente vorab mit der Polyisocyanatkomponente umgesetzt werden, um während der nachfolgenden Verarbeitung in etwa gleichvolumige Reaktionsströme miteinander umsetzen zu können. Die Autoren der US-PS 4 374 210 glaubten nämlich einen Nachteil des Verfahrens gemäß DE-AS 2 622 951 erkannt zu haben, der darin besteht, daß bei dem älteren Verfahren deutlich ungleiche Volumenströme (geringes Volumen der Polyisocyanatkomponente und großes Volumen der gegenüber Isocyanatgruppen reaktionsfähigen Komponente) miteinander vermischt werden müssen.

Überraschenderweise wurde jetzt gefunden daß eine praktisch vollständige Vorreaktion der höhermolekularen Polyolkomponente mit der Polyisocyanatkomponente und anschließende Umsetzung des resultierenden NCO-Semiprepolymeren mit der Diaminkomponente zu einer Reihe bemerkenswerter Vorteile führt. obwohl bei einer derartigen Arbeitsweise ebenfalls extrem unterschiedliche Volumenströme miteinander zur Reaktion gebracht werden müssen (großes Volumen des NCO-Semiprepolymeren und kleines Volumen der Diaminkomponente).

Das nachstehend näher beschriebene erfindungsgemäße Verfahren weist insbesondere folgende Vorteile auf:
1. Das Verhältnis Diamin : Polyol kann wesentlich erhöht werden, so daß der weitaus größte Teil der Isocyanatgruppen unter Bildung von die mechanischen Eigenschaften verbessernden Harnstoffsegmenten abreagiert.
2. Bei gleichem Verhältnis von Diamin zu Polyol resultiert eine Verbesserung der mechanischen und thermomechanischen Eigenschaften, insbesondere der Wärmeformbeständigkeit bei gleichzeitig guten Tieftemperatureigenschaften. Die Torsionskurve zeigt einen starken Abfall im Tieftemperaturbereich (-40°C bis 0°C) und einen flacheren Verlauf im Bereich oberhalb 100°C im Vergleich zu den Kurven der im One-Shot-Verfahren hergestellten Elastomeren (s. Patentbeispiele 3 und 4).
3. Auf der Verwendung von Katalysatoren die die Wärmeformbeständigkeit und die Alterungsbeständigkeit stark negativ beeinflußen, kann ganz verzichtet wewrden, da die im Vergleich zu den reaktiven Aminogruppen langsamen OH-Gruppen der Polyhydroxylverbindungen in der Vorreaktion schon abreagiert sind.

Die US-PS 4 297 444 beschreibt zwar bereits die Herstellung von Polyurethanformkörpern nach dem Prinzip der Reaktionsspritzgußtechnik unter Verwendung von organischen Polyisocyanaten, höhermolekularen Polyhydroxylverbindungen und niedermolekularen Kettenverlängerungsmitteln, wobei auch hier gemäß einer bevorzugten Arbeitsweise die Gesamtmenge der höhermolekularen Polyhydroxylkomponente vorab mit der Polyisocyanatkompokomponente zu einem NCO-Semiprepolymer umgesetzt wird, jedoch vermittelt diese Vorveröffentlichung keinen Hinweis, daß auch Systeme der erfindungsgemäß einzusetzenden Art, d.h. solche, deren Diaminkomponente aus alkylsubstituierten aromatischen Diaminen besteht, nach diesem Prinzip verarbeitbar sein würden bzw. bei einem solchen Verfahren die genannten Vorteile resultieren würden: Die Vorveröffentlichung erwähnt in der Liste der geeigneten Kettenverlängerungsmittel beiläufig zwar auch aromatische Diamine, ohne jedoch hierauf näher einzugehen. Als bevorzugte Kettenverlängerungsmittel werden vielmehr einfache Diole wie Ethylenglykol oder 1,4-Butandiol herausgestellt. In den Ausführungsbeispielen wird ausschließlich Ethylenglykol verwendet. Die Verarbeitbarkeit von Reaktivsystemen, bestehend aus einem großen Volumenstrom NCO-Semiprepolymer und einem kleinen Volumenstrom hochreaktiver Diamine der erfindungsgemäß einzusetzenden Art nach der Reaktionsspritzgußtechnik konnte somit aus der Lehre der US-PS 4 297 444 nicht hergeleitet werden.

Auch die Lehre der DE-AS 1 240 654 konnte das erfindungsgemäße Verfahren nicht nahelegen, da gemäß dieser Vorveröffentlichung, wie den Ausführungsbeispielen zu entnehmen, vorzugsweise monomerenfreie, d.h. echte NCO- Prepolymere auf Basis andere Polyisocyanate als solchen erfindungsgemäß einzusetzenden Art und difunktionelle Polyhydroxylverbindungen, vorzugsweise in Gegenwart von Lösungsmitteln mit alkylsubstituierten Diaminen nach dem klassischen Prepolymerverfahren und keineswegs nach dem Prinzip der Reaktionsspritzgußtechnik zur Reaktion gebracht werden,

Gegenstand der Erfindung ist ein Verfahren zur Herstellung von gegebenenfalls zellförmigen, elastischen Formkörpern mit einer geschlossenen Oberflächenschicht aus Urethangruppen aufweisenden Polyharnstoff-Elastomeren und einer Dichte von 0,8 bis 1,4 g/cm³ auf der Basis von
a) einer Polyisocyanatkomponente, bestehend aus einem, gegebenenfalls durch chemische Modifizierung verflüssigten, Polyisocyanat oder Polyisocyanatgemisch der Diphenylmethanreihe,
b) einer Polyolkomponente mit einem (mittleren) Molekulargewicht von 1800 bis 18 000 und einer (mittleren) Hydroxylfunktionalität von mindestens 2,5, bestehend aus mindestens einem, gegebenenfalls dispergierte organische Füllstoffe enthaltenden Polyether- oder Polyesterpolyol,
c) aromatischen Diaminen, die zumindest in jeweils einer ortho-Stellung zu den Aminogruppen einen Alkylsubstituenten aufweisen, und
d) gegebenenfalls den aus der Polyurethanchemie an sich bekannten Hilfs- und Zusatzmitteln, wobei das Mengenverhältnis der Komponenten a) und b) einem NCO/OH-Äquivalentverhältnis von mindestens 4:1 entspricht, und die Komponente c) in einer solchen Menge zur Anwendung gelangt, daß die NCO-Kennzahl, bezogen auf die Komponenten a), b) und c) bei 70 bis 130 liegt,
   dadurch gekennzeichnet, daß man mindestens 90 % der Komponente b) einstufig mit der Gesamtmenge der Komponente a) zu einem Isocyanatgruppen aufweisenden Semiprepolymeren umsetzt und dieses mit der Komponente c) oder einem Gemisch der Komponente c) mit bis zu 10 Gew.-% der Komponente b) nach der Reaktionsspritzgußtechnik zur Reaktion bringt, wobei die gegebenenfalls mitverwendeten Hilfs- und Zusatzmittel einer oder beiden der genannten Reaktionskomponenten einverleibt werden.

Der Begriff "Polyisocyanat der Diphenylmethanreihe" stellt den Oberbegriff für alle Polyisocyanate dar, wie sie bei der Phosgenierung von Anilin/Formaldehyd-Kondensaten anfallen und in den Phosgenierungsprodukten als Gemisch vorliegen. Der Begriff "Polyisocyanatgemisch der Diphenylmethanreihe" steht für beliebige Gemische von Polyisocyanaten der Diphenylmethanreihe, d.h. beispielsweise für die genannten Phosgenierungsprodukte, die Gemische, die bei der destillativen Auftrennung derartiger Gemische als Destillat oder Destillationsrückstand anfallen und beliebige Abmischungen von Polyisocyanaten der Diphenylmethanreihe.

Der Begriff "NCO-Semiprepolymer" steht für Umsetzungsprodukte von Polyisocyanaten der erfindungsgemäß einzusetzenden Art mit unterschüssigen Mengen an höhermolekularen Polyhydroxylverbindungen der erfindungsgemäß einzusetzenden Art. Bei den NCO-Semiprepolymeren handelt es sich um Gemische von echten Umsetzungsprodukten mit überschüssigen, nicht umgesetzten Polyisocyanaten.

Unter "Isocyanatkennzahl" versteht man den Quotienten aus Anzahl der Isocyanatgruppen und Anzahl der gegenüber Isocyanatgruppen reaktionsfähigen Gruppen, multipliziert mit 100.

Beim erfindungsgemäßen Verfahren werden als Ausgangskomponente a) beliebige Polyisocyanate oder Polyisocyanatgemische der Diphenylmethanreihe, gegebenenfalls in modifizierter Form, eingesetzt. Bei der chemischen Modifizierung handelt es sich um eine chemische Reaktion, die zur Verflüssigung von festen Polyisocyanaten, insbesondere von 4,4'-Diisocyanatodiphenylmethan führt.

Typische Beispiele für geeignete Polyisocyanate a) sind 4,4'-Diisocyanatodiphenylmethan, dessen Gemische mit 2,2'- und insbesondere 2,4'-Diisocyanatodiphenylmethan, Gemische dieser Diisocyanatodiphenylmethan-Isomeren mit ihren höheren Homoiogen, wie sie bei der Phosgenierung von Anilin/Formaldehyd-Kondensaten anfallen, durch partielle Carbodiimidisierung der Isocyanatgruppen der genannten Di- und/oder Polyisocyanate, modifizierte Di- und/oder Polyisocyanate oder beliebige Gemische derartiger Polyisocyanate.

Gegebenenfalls können jedoch auch bis zu 30 Gew.-%, vorzugsweise bis 20 Gew.-%, bezogen auf die Komponente a), Urethangruppen aufweisende Umsetzungsprodukte der genannten Di- und/oder Polyisocyanate mit unterschüssigen Mengen an aliphatischen Polyhydroxylverbindungen des Molekulargewichtsbereichs 62 bis 700 wie z.B. Ethylenglykol, Trimethylolpropan, Propylenglykol, Dipropylenglykol oder Polypropylenglykole des genannten Molekulargewichtsbereiches, bei der Semiprepolymerisierung mitverwendet werden.

Die Polyolkomponente b) weist ein aus dem Hydroxylgruppengehalt und der Hydroxylfunktionalität errechenbares (mittleres) Molekulargewicht von 1500 bis 18 000, vorzugsweise 2000 bis 14 000 und eine (mittlere) Hydroxylfunktionalität von mindestens 2,5, vorzugsweise von >3, besonders bevorzugt von >3,5, auf.

Geeignet sind insbesondere die dieser Definition entsprechenden Polyether- oder Polyesterpolyole bzw. Gemische derartiger Polyhydroxylverbindungen. In Betracht kommen beispielsweise entsprechende Polyetherpolyole, die gegebenenfalls organische Füllstoffe in dispergierter Form enthalten. Bei diesen dispergierten Füllstoffen handelt es sich beispielsweise um Vinylpolymerisate, wie sie z.B. durch Polymerisation von Acrylnitril und Styrol in den Polyetherpolyolen als Reaktionsmedium entstehen (US-PS 3 383 351, 3 304 273, 3 523 093, 3 110 695, DE-PS 1 152 536) oder um Polyharnstoffe oder Polyhydrazide, wie sie durch eine Polyadditionsreaktion in den Polyetherpolyolen als Reaktionsmedium aus organischen Diisocyanaten und Diaminen bzw. Hydrazin entstehen (DE-PS 1 260 142, DE-OS 2 423 984, 2 519 004, 2 513 815, 2 550 833, 2 550 862, 2 633 293 oder 2 550 796).

Die Polyetherpolyole werden in an sich bekannter Weise durch Alkoxylierung von geeigneten Startermolekülen oder von Gemischen geeigneter Startermoleküle hergestellt, wobei zur Alkoxylierung insbesondere Propylenoxid und gegebenenfalls zusätzlich Ethylenoxid verwendet werden. Geeignete Startermoleküle sind beispielsweise Wasser, Ethylenglykol, Propylenglykol, Trimethylolpropan, Pentaerythrit, Sorbit oder Rohrzucker oder Gemische derartiger Verbindungen, wobei die Funktionalität der Startermoleküle bzw. die mittlere Funktionalität der Gemische der Startermoleküle den oben gemachten Ausführungen bezüglich der Hydroxylfunktionalität angepaßt werden muß. Besonders bevorzugt sind solche Polyetherpolyole, deren Hydroxylgruppen zumindest zu 50%, vorzugsweise zumindest zu 70 % aus primären Hydroxylgruppen bestehen. Derartige Polyetherpolyole entstehen durch endständiges Aufpfropfen von Ethylenoxid.

Geeignete Polyesterpolyole sind z.B. die in DE-AS 2 622 951, Kolonne 7, Zeile 54 bis Kolonne 8, Zeile 37 genannten Verbindungen, soweit sie den oben gemachten Ausführungen bezüglich Molekulargewicht und Hydroxylfunktionalität entsprechen.

Besonders bevorzugt werden beim erfindungsgemäßen Verfahren als Komponente b) Polyetherpolyole oder Abmischungen von Polyetherpolyolen der genannten Art verwendet.

Bei der Komponente c) handelt es sich um Diamine mit ausschließlich aromatisch gebundenen primären Aminogruppen, die zumindest in jeweils einer ortho-Stellung zu den Aminogruppen einen Alkylsubstituenten aufweisen, insbesondere um solche, die in ortho-Stellung zu der ersten Aminogruppen mindestens einen Alkylsubstituenten und in ortho-Stellung zur zweiten Aminogruppen zwei Alkylsubstituenten mit jeweils 1 bis 4, vorzugsweise 1 bis 3 Kohlenstoffatomen aufweisen, besonders bevorzugt um solche, die in jeweils mindestens einer ortho-Stellung zu den Aminogruppen einen Ethyl-, n-Propyl- und/oder Isopropylsubstituenten und gegebenenfalls in weiteren ortho-Stellungen zu den Aminogruppen Methylsubstituenten aufweisen. Beispiele für derartige Diamine bzw. bevorzugte Diamine sind 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, dessen technische Gemische mit 1-Methyl-3,5-diethyl-2,6-diaminobenzol oder 3,5,3',5'-Tetraisopropyl-4,4'-diaminodiphenylmethan. Beliebige Gemische derartiger Diamine können ebenfalls als Komponente c) verwendet werden. Besonders bevorzugt handelt es sich bei der Komponente c) um 1-Methyl-3,5-diethyl-2,4-diaminobenzol oder um dessen technische Gemische mit 1-Methyl-3,5-diethyl-2,6-diaminobenzol (DETDA).

Bei den gegebenenfalls mitzuverwendenden Hilfs- und Zusatzmitteln d) handelt es sich beispielsweise um mineralische Füllstoffe, Farbstoffe, Pigmente, organische Treibmittel und/oder innere Formtrennmittel. Derartige, an sich bekannte Hilfs- und Zusatzmittel sind beispielsweise in EP-B-81 701 beschrieben. Gut geeignete innere Formtrennmittel sind beispielsweise die Polyrizinolsäuren wie sie irr DE-OS 2 427 273 und insbesondere EP-A-180 749 beschrieben sind oder auch Kombinationen aus Zinkcarboxylaten mit aliphatischen Aminen wie sie in US-PS 4 519 965, 4 581 386 oder DE-OS 36 26 673 bzw. 36 39 502 beschrieben sind.

Zur Durchführung des erfindungsgemäßen Verfahrens gelangt die Komponente b) in einer solchen Menge zum Einsatz, die einem NCO/OH-Äquivalentverhältnis, bezogen auf die Reaktivgruppen der Komponente a) und b), von mindestens 4:1, vorzugsweise mindestens 6:1 und insbesondere bis 15:1 entspricht. Die Komponente c) wird in einer solchen Menge verwendet, daß, bezogen auf die Gesamtmenge der Komponenten a), b) und c), eine Isocyanatkennzahl von 70 bis 130 gewährleistet ist.

Zur Durchführung des erfindungsgemäßen Verfahrens wird zunächst aus der Polyisocyanatkomponente a) und mindestens 90 %, vorzugsweise der Gesamtmenge der Polyolkomponente b) ein NCO-Semiprepolymer hergestellt. Die diesbezügliche Umsetzung erfolgt im allgemeinen innerhalb des Temperaturbereichs von 25 bis 100°C. Bei der Herstellung der NCO-Semiprepolymere wird die Gesamtmenge der Polyisocyanatkomponente a) mit der Gesamtmenge der zur Herstellung der NCO-Semiprepolymeren vorgesehenen Komponente b) umgesetzt.

Die so erhaltenen NCO-Semiprepolymeren stellen dann die Komponente A) für die weitere Umsetzung dar. Die Komponente A) wird in der zweiten Stufe des erfindungsgemäßen Verfahrens mit der Komponente B) nach dem Prinzip der Reaktionsspritzgußtechnik unter Verwendung von geschlossenen Formen verarbeitet. Die Komponente B) besteht aus der Diaminkomponente c) und gegebenenfalls bis zu 10% der Polyolkomponente b), die nichtzur Herstellung der NCO-Semiprepolymeren verwendet worden ist. Die gegebenenfalls mitverwendeten Hilfs- und Zusatzmittel können sowohl der Komponente A) als auch der Komponente B) vor der Durchführung der zweiten Stufe des Verfahrens einverleibt werden.

Bei der Durchführung der zweiten Stufe des erfindungsgemäßen Verfahrens wird nach der bekannten Reaktionsspritzgußtechnik (RSG-Verfahren, englisch: "RIM-process") verfahren, wie sie beispielsweise in den oben zitierten Literaturstellen beschrieben ist. Die Menge des in die Form eingebrachten Reaktionsgemischs wird im übrigen so bemessen, daß die Formkörper eine Dichte von 0,8 bis 1,4, vorzugsweise 1,0 bis 1,3 g/cm³ aufweisen. Bei Formkörpern einer Dichte von 0,8 bis ca. 1,0 g/cm³ handelt es sich um mikrozellulare Elastomeren, d.h. um keine echten Schaumstoffe mit mit dem bloßen Auge sichtbarer Schaumstruktur. Dies bedeutet, daß die gegebenenfalls mitverwendeten Treibmittel weniger die Funktion eines echten Treibmittels als vielmehr die Funktion eines Fließmittels ausüben. Formkörper mit einer über 1,2 g/cm³ liegenden Dichte resultieren insbesondere dann, wenn mineralische Füllstoffe mitverwendet werden.

Die Ausgangstemperatur des in die Form eingebrachten Reaktionsgemischs aus den Komponenten A) und B) liegt im allgemeinen zwischen 20 und 80, vorzugsweise 40 bis 70°C. Die Temperatur der Form liegt im allgemeinen bei 30 bis 130, vorzugsweise 40 bis 80°C.

Bei den zum Einsatz gelangenden Formwerkzeugen handelt es sich um solche der an sich bekannten Art, vorzugsweise aus Aluminium oder Stahl. Zur Verbesserung der Entformungseigenschaften können die Innenwände der verwendeten Form gegebenenfalls mit bekannten äußeren Formtrennmitteln beschichtet werden.

Die in der Form entstehenden Formkörper können im allgemeinen nach einer Formstandzeit von 5 bis 180 Sekunden entformtwerden. Gegebenenfalls schließt sich an der Entformung ein Tempern bei einer Temperatur von ca. 60 bis 180°C während eines Zeitraums von 30 bis 120 Minuten an.

Die nach dem erfindungsgemäßen Verfahren erhältlichen Formkörper eignen sich insbesondere zur Herstellung von flexiblen Automobilstoßstangen bzw. von flexiblen Karosserieelementen.

### Beispiele

Die Verarbeitung der in den folgenden Beispielen beschriebenen Rezepturen erfolgte mit Hilfe der Reaktionsspritzgußtechnik.

Die NCO-Prepolymeren (= Komponente A)) und die das Diamin c) enthaltende Komponente B) wurden einem Hochdruckdosieraggregat zugeführt und nach intensiver Vermischung in einem zwangsgesteuerten Mischkopf in kürzester Zeit in ein temperierbares heißes Metallwerkzeug gedrückt, wobei die Forminnenwand mit einem gebrauchsfertigen, handelsüblichen äußeren Formtrennmittel auf Seifenbasis RTCW 2006 der Fa. Chem Trend beschichtet war.

Das Plattenwerkzeug aus Stahl erlaubt die Herstellung von Prüfplatten der Abmessungen 300 x 200 x 3 mm. Das Füllen des Werkzeugs erfolgt von der Längsseite über einen Staubalkenanguß.

### Beispiel 1

Das in diesem Beispiel eingesetzte NCO-Semiprepolymer (= Komponente A)) wurde durch 3-stündige Reaktion bei 80°C von 60 Gew.-Teilen eines Polyetherpolyols der OH-Zahl 28, hergestellt durch Propoxylierung von Sorbit und anschließend Ethoxylierung des Propoxylierungsprodukts (Gewichtsverhältnis PO:EO=87:13), mit 36,9 Gew.-Teilen 4,4'-Diisocyanatodiphenylmethan erhalten. Das NCO-Semiprepolymer wies einen NCO-Gehalt von 11,3 Gew.-% auf.

100 Gew.-Teile dieses NCO-Semiprepolymers A) werden mit 23,9 Gew.-Teilen einer Mischung (= Komponente B)) aus 15,5 Gew.-Teilen 1-Methyl-3,5-diethyl-2,4-diaminobenzol und 8,4 Gew.-Teilen 1-Methyl-3,5-diethyl-2,6-diaminobenzol nach dem RSG-Verfahren verarbeitet (Verhältnis der Volumenströme ca. 4:1).

Die Werkzeugtemperatur betrug 80°C und die Formstandzeit 30''. Unter diesen Bedingungen resultierte ein Formteil mit einwandfreiem Entformungsverhalten und Aussehen. Folgende mechanische Werte wurden danach an der Testplatte ermittelt (nach Tempern 45' bei 120°C).

| | |
|---|---|
| Kennzahl | 100 |
| Rohdichte (DIN 53 420) | 1.11 kg/m³ |
| Shore D (DIN 53 505) | 62 |
| Biegemodul (ASTM-D 790-71) | 390 MPa |
| Zugfestigkeit (DIN 53 504) | 26 MPa |
| Bruchdehnung (DIN 53 504) | 160 % |
| HDT ISO R75 Methode B - 0,45 MPa Belastung 168°C | |
| Sag-Test Prüfkörperdicke 150 mm (1h/160° C) | 18 mm |

### Beispiel 2

In diesem Beispiel wurde genauso verfahren wie in Beispiel 1, mit dem Unterschied, daß zur Isocyanat-Komponente A) vor der Umsetzung zusätzlich 22 Gew.-Teile Glasfasern als Füllstoff zugesetzt wurden (Verhältnis der Volumenströme ca. 5:1).

| | |
|---|---|
| Kennzahl | 100 |
| Rohdichte (DIN 53 420) | 1.21 kg /m³ |
| Shore D (DIN 53 505) | 67 |
| Biegemodul (ASTM-D 790-71) | längs 1080 MPa |
| | quer 580 MPa |
| Zugfestigkeit (DIN 53 504₎ | längs 23 MPa |
| | quer 19 _{MPa} |
| Bruchdehnung (DIN 53 504) | längs 70 % |
| | quer 100 % |
| HDT ISO R75 Methode B - 0,45 MPa Belastung 206°C | |
| Sag-Test Prüfkorperdicke 150 mm (1h/160° C) | 7 mm |

### Beispiel 3

Das in diesem Beispiel eingesetzte NCO-Semiprepolymer (= Komponente A) wurde durch 3-stündige Reaktion bei 80°C von 74 Gew.-Teilen eines Polyetherpolyols der OH-Zahl 35, hergestellt durch Propoxylierung von Trimethylolpropan und anschließend Ethoxylierung des Propoylierungsproduktes (Gewichtsverhältnis PO:EO = 86. 55:13.45), mit 41.4 Gew.-Teilen 4,4'-Diisocyanatodiphenylmethan erhalten. Das NCO-Semiprepolymer wies einen NCO-Gehalt von 10.5 Gew.-% auf.

114.4 Gew.-Teile dieses NCO-Semiprepolymers A) werden mit 25.5 Gew.-Teilen einer Mischung (= Komponente B) aus 16.6 Gew.-Teilen 1-Methyl-3,5-diethyl-2,4-diaminoben-zol und 8,9 Gew.-Teilen 1-Methyl-3,5-diethyl-2,6-diaminobenzol nach dem RSG-Verfahren verarbeitet (Verhältnis der Volumenströme ca. 4.5:1).

Die Werkzeugtemperatur betrug 80°C und die Formstandzeit 30''. Unter diesen Bedingungen resultierte ein Formteil mit einwandfreiem Entformungsverhalten und Aussehen. Die mechanischen Eigenschaften des so hergestellten Formkörpers (nach Tempern 45' bei 120°C) sind in Tabelle 1 zusammengefaßt.

### Beispiel 4

### Vergleichsbeispiel zu Beispiel 3: One-Shot-Verfahren

Die Polyisocyanatkomponente besteht aus durch Umsetzung mit Tripropylenglykol modifiziertem 4,4'-Diisocyanatodiphenylmethan mit einem NCO-Gehalt von 23 Gew.-%.

60.8 Gew.-Teile der Polyisocyanatkomponente werden mit einem Gemisch aus 74 Gew.-Teilen des Polyetherpolyols aus Beispiel 3, 25.5 Gew.-Teilen eines Gemisches aus 16.6 Gew.-Teilen 1-Methyl-3,5-diethyl-2,4-diaminobenzol und 8,9 Gew.-Teilen 1-Methyl-3,5-diethyl-2,6-diaminobenzol sowie 0,12 Gew.-Teilen Dibutylzinndilaurat als Katalysatoren nach der RSG-Technik umgesetzt.

Die Werkzeugtemperatur betrug 80°C und die Formstandzeit 30''. Die mechanischen Werte (nach Tempern 45' bei 120°C) sind im Vergleich zu denen des Beispiels 3 der Tabelle 1 zu entnehmen.

**Tabelle 1**

| Mechanische Eigenschaften | | |
|---|---|---|
| | Beispiel 3 | Beispiel 4 |
| Kennzahl | 100 | 100 |
| Rohdichte (DIN 53420) | 1.1 kg/m³ | 1.1 kg/m³ |
| Shore D (DIN 53505) | 65 | 60 |
| Zugfestigkeit (DIN 53504) | 42 MPa | 40 MPa |
| Bruchdehnung (DIN 53504) | 275 % | 300 % |

| Torsionmodul (DIN 53520) bei | | |
|---|---|---|
| -25° C | 350 MPa | 445 MPa |
| 0° C | 212 MPa | 260 MPa |
| 50° C | 163 MPa | 163 MPa |
| 100° C | 115 MPa | 92 MPa |
| 150° C | 92 MPa | 60 MPa |

Mit nachstehenden Beispielen 5 bis 8 wird gezeigt, daß die Herstellung von elastischen Formkörpern der Art der erfindungsgemäßen Verfahrensprodukte unter Verwendung von unmodifiziertem 4,4'-Diisocyanatodiphenylmethan (MDI-4,4') nur unter der Voraussetzung gelingt, daß der ganz überwiegende Teil der Komponente b) vorab mit der Gesamtmenge des MDI-4,4' zu einem Semiprepolymeren umgesetzt wird, welches anschließend mit der Komponente c) zur Reaktion gebracht wird. Alle Abweichungen von diesem Prinzip, sei es ein Arbeiten nach dem one shot-Prinzip gemäß DE-AS 2 622 951 oder nach der Verfahrensweise gemäß UP-PS 4 374 210, sowohl mit als auch ohne Verwendung von Katalysatoren, scheitern an dem Umstand, daß das hochreaktive, im Überschuß vorliegende MDI-4,4' mit dem ebenfalls im Überschuß vorliegenden aromatischen Diamin (DETDA) zu schwer löslichem, zur Kristallisation neigendem Polyharnstoff abreagiert, so daß insgesamt inhomogene Verfahrensprodukte resultieren. Aus diesem Grund muß bei den Verfahren der zitierten Vorveröffentlichungen eine Reduzierung der Kristallisationsneigung der Polyharnstoffe und eine Erhöhung der Verträglichkeit der Polyisocyanatkomponente a) mit den übrigen Reaktanten, insbesondere der Polyolkomponente b) durch eine vorab erfolgende Urethanisierung der Polyisocyanatkomponente vorgenommen werden.

### Beispiel 5 (erfindungsgemäß)

Nach der Verfahrensweise von Beispiel 1 wurde eine A-Komponente mit einer B-Komponente unter Einhaltung einer Kennzahl von 100 verarbeitet, wobei die Temperatur der Komponenten vorab auf ca. 50°C eingestellt worden ist.

Bei der A-Komponente handelt es sich um 80,7 Gew.-Teile eines NCO-Semiprepolymeren mit einem NCO-Gehalt von 11,2 Gew.-%, hergestellt durch Umsetzung von 30,7 Gew.-Teilen MDI-4,4' mit 50 Gew.-Teilen eines Polyetherpolyols der OH-Zahl 35, hergestellt durch Propoxylierung von Trimethylolpropan und anschließende Ethoxylierung des Propoxylierungsprodukts (PO:EO-Gew.-Verhältnis = 87:13).

Bei der B-Komponente handelt es sich um 19,3 Gew.-Teile eines Gemischs aus 15,5 Gew.-Teilen 1-Methyl-3,5-diethyl-2,4-diaminobenzol und 8,4 Gew.-Teilen 1-Methyl-3,5-diethyl-2,6-diaminobenzol (DETDA).

Das Mischungsverhältnis A:B lag bei 4:1.

Es resultiert ein Formkörper einer Rohdichte von ca. 1,1 kg/m³ mit ausgezeichneten mechanischen Eigenschaften.

### Beispiel 6 (Vergleich)

Beispiel 5 wird wiederholt mit der Abänderung, daß als A-Komponente 55,7 Gew.-Teile eines NCO-Semiprepolymeren mit einem NCO-Gehalt von 17,4 Gew.-%, hergestellt durch Umsetzung von 30,7 Gew.-Teilen MDI-4,4' mit 25 Gew.-Teilen des Polyetherpolyols aus Versuch 1 und als B-Komponente ein Gemisch aus 19,3 Gew.-Teilen DETDA, 25 Gew.-Teilen des gleichen Polyetherpolyols, 0,125 Gew.-Teilen Dibutylzinndilaurat (DBTL) und 0,25 Gew.-Teilen einer 33 %igen Lösung von Triethylendiamin in Dipropylenglykol (33 LV) verwendet wurden.

Das Mischungsverhältnis A:B lag bei 1,25:1.

Es resultiert ein sprödes, leicht splitterndes Formteil mit völlig unzureichenden mechanischen Eigenschaften.

### Beispiel 7 (Vergleich)

Beispiel 5 wird wiederholt mit der Abänderung, daß als A-Komponente 50 Gew.-Teile eines NCO-Semiprepolymeren mit einem NCO-Gehalt von 19,3 Gew.-%, hergestellt durch Umsetzung von 30,7 Gew.-Teilen MDI-4,4' mit 19,3 Gew.-Teilen des Polyetherpolyols aus Versuch 1 und als B-Komponente ein Gemisch aus 19,3 Gew.-Teilen DETDA, 30,7 Gew.-Teilen des Polyetherpolyols aus Versuch 1, 0,125 Gew.-Teilen DBTL und 0.25 Gew.-Teilen 33 LV verwendet wurden.

Das Mischungsverhältnis A:B lag bei 1:1.

Es resultiert ebenso wie gemäß Beispiel 6 ein splitternder Prüfkörper mit völlig unzureichenden mechanischen Eigenschaften.

### Beispiel 8 (Vergleich)

Beispiel 5 wurde wiederholt mit der Abänderung, daß als A-Komponente 30,7 Gew.-Teile MDI-4,4' und als B-Komponente ein Gemisch aus 19,3 Gew.-Teilen DETDA, 50,0 Gew.-Teilen des Polyetherpolyols aus Versuch 1, 0,125 Gew.-Teilen DBTL und 0,25 Gew.-Teilen 33 LV verwendet wurden.

Das Mischungsverhältnis A:B lag bei 0,44:1.

Ebenso wie in Beispielen 6 und 7 resultierte auch hier ein splitternder Formkörper mit völlig unzureichenden mechanischen Eigenschaften.

Bei einer Wiederholung der Beispiele 6 bis 8 ohne Mitverwendung von Katalysatoren resultierten Reaktionsansätze, die sich nicht verfestigen.

## Patentansprüche

1. Verfahren zur Herstellung Von gegebenenfalls zellförmigen, elastischen Formkörpern mit einer geschlossenen Oberflächenschicht aus Urethangruppen aufweisenden Polyharnstoff-Elastomeren und einer Dichte von 0,8 bis 1,4 g/cm³ auf der Basis von
a) einer Polyisocyanatkomponente, bestehend aus einem, gegebenenfalls durch chemische Modifizierung verflüssigten, Polyisocyanat oder Polyisocyanatgemisch der Diphenylmethanreihe,
b) einer Polyolkomponente mit einem (mittleren) Molekulargewicht von 1500 bis 18 000 und einer (mittleren) Hydroxylfunktionalität von mindestens 2,5, bestehend aus mindestens einem, gegebenenfalls dispergierte organische Füllstoffe enthaltenden Polyether- oder Polyesterpolyol,
c) aromatischen Diaminen, die zumindest in jeweils einer ortho-Stellung zu den Aminogruppen einen Alkylsubstituenten aufweisen, und
d) gegebenenfalls den aus der Polyurethanchemie an sich bekannten Hilfs- und Zusatzmitteln,
wobei das Mengenverhältnis der Komponenten a) und b) einem NCO/OH-Äquivalentverhältnis von mindestens 4:1 entspricht, und die Komponente c) in einer solchen Menge zur Anwendung gelangt, daß die NCO-Kennzahl, bezogen auf die Komponenten a), b) und c) bei 70 bis 130 liegt,
dadurch gekennzeichnet, daß man mindestens 90 % der Komponente b) einstufig mit der Gesamtmenge der Komponente a) zu einem Isocyanatgruppen aufweisenden Semiprepolymeren umsetzt und dieses mit der Komponente c) oder einem Gemisch der Komponente c) mit bis zu 10 Gew.-% der Komponente b) nach der Reaktionsspritzgußtechnik zur Reaktion bringt, wobei die gegebenenfalls mitverwendeten Hilfs- und Zusatzmittel einer oder beiden der genannten Reaktionskomponenten einverleibt werden.

2. Verfahren gemäß Anspruch 1, dadurch gekennzeichnet, daß man die Gesamtmenge der Komponente b) mit der Komponente a) zu einem NCO-Semiprepolymeren umsetzt.

3. Verfahren gemäß Anspruch 1 und 2, dadurch gekennzeichnet, daß man als Komponente b) Polyetherpolyole eines (mittleren) Molekulargewichts von 2000 bis 14 000 und einer (mittleren) Hydroxylfunktionalitat von >3 verwendet.

4. Verfahren gemäß Anspruch 1 bis 3, dadurch gekennzeichnet, daß man als Komponente c) 1-Methyl-3,5-diethyl-2,4-diaminobenzol oder dessen technischen Gemische mit 1-Methyl-3,5-diethyl-2,6-diaminobenzol verwendet.

## Claims

1. Process for the production of optionally cellular, elastic moulded bodies having a closed surface skin, from polyurea elastomers exhibiting urethane groups, and a density of from 0.8 to 1.4 g/cm³ based on
a) a polyisocyanate component comprising a polyisocyanate or polyisocyanate mixture of the diphenylmethane series, optionally liquefied by chemical modification,
b) a polyol component having an (average) molecular weight of from 1500 to 18000 and an (average) hydroxyl functionality of at least 2.5, comprising at least one polyether polyol or polyester polyol which optionally contains dispersed organic fillers,
c) aromatic diamines exhibiting at least one alkyl substituent which is in each case in the ortho position relative to the amino groups, and
d) optionally the auxiliary substances and additives which are known per se from polyurethane chemistry,
with the quantitative ratio of components a) and b) corresponding to an NCO/OH equivalent ratio of at least 4 : 1, and the component c) being used in a quantity such that the NCO index, calculated on components a), b) and c), is around 70 to 130,
characterised in that at least 90% of component b) is reacted in a single stage with the total quantity of component a) to form a semi-prepolymer exhibiting isocyanate groups, which is reacted in the reaction injection moulding process with component c) or a mixture of component c) with up to 10 wt-% of component b), with the optionally co-used auxiliary substances and additives being incorporated in one or both of the named reaction components.

2. Process according to Claim 1, characterised in that the total quantity of component b) is reacted with component a) to form an NCO semi-prepolymer.

3. Process according to Claims 1 and 2, characterised in that polyether polyols having an (average) molecular weight of from 2000 to 14000 and an (average) hydroxyl functionality of > 3 are used as component b).

4. Process according to Claims 1 to 3, characterised in that 1-methyl-3,5-diethyl-2,4-diaminobenzene or technical mixtures thereof with 1-methyl-3,5-diethyl-2,6-diaminobenzene is/are used as component c).

## Revendications

1. Procédé de préparation de corps moulés élastiques éventuellement cellulaires avec une couche superficielle fermée composés d'élastomères de polyurée présentant des radicaux uréthanne et une densité de 0,8 à 1,4 g/cm³ à base
a) d'une composante polyisocyanate composée d'un polyisocyanate ou d'un mélange de polyisocyanates de la série des diphénylméthanes éventuellement liquéfié par modification chimique,
b) d'une composante polyol avec un poids moléculaire (moyen) de 1.500 à 18.000 et une fonctionnalité hydroxyle (moyenne) d'au moins 2,5, composée d'au moins un polyétherpolyol ou un polyesterpolyol contenant éventuellement des charges organiques dispersées,
c) de diamines aromatiques qui présentent au moins un substituant alkyle respectivement en position ortho par rapport aux radicaux amino et
d) d'éventuellement des adjuvants et additifs connus de la chimie des polyuréthannes,
le rapport quantitatif des composantes a) et b) correspondant à un rapport d'équivalent NCO/OH d'au moins 4:1 et la composante c) étant utilisée dans une quantité telle que l'indice NCO est de l'ordre de 70 à 130 par rapport aux composantes a), b) et c),
caractérisé en ce qu'au moins 90 % de la composante b) sont amenés à réagir en une étape avec la quantité totale de la composante a) pour former un semiprépolymère présentant des radicaux isocyanate qui est lui-même amené à réagir avec la composante c) ou un mélange de la composante c) et de jusqu'à 10% en poids de la composante b) selon la technique du moulage réactif par injection, les adjuvants et additifs éventuellement utilisés étant incorporés à l'une ou l'autre des composantes citées de la réaction.

2. Procédé selon la revendication 1 caractérisé en ce que la quantité totale de la composante b) est amenée à réagir avec la composante a) pour former un semiprépolymère NCO.

3. Procédé selon la revendication 1 et 2 caractérisé en ce que les composantes b) utilisées sont des polyétherpolyols d'un poids moléculaire (moyen) de 2.000 à 14.000 et une fonctionnalité hydroxyle moyenne de > 3.

4. Procédé selon la revendication 1 à 3 caractérisé en ce que la composante c) utilisée est le 1-méthyl-3,5-diéthyl-2,4-diaminobenzène ou ses mélanges techniques avec le 1-méthy1-3,5-diéthyl-2,6-diaminobenzène.
